# EUROPEAN PATENT APPLICATION

(11) **EP 1 118 643 A1**
(43) Date of publication of application: **25.07.2001**
(21) Application number: 00109403.6
(22) Date of filing: 03.05.2000
(51) Int. Cl.: C09D 11/00, C09D 11/16

(54) **Metallic lustre water-based ink composition, method of its manufacture and writing instrument using said ink**

(30) Priority: 20.01.2000 IT TO200053
(71) Applicant: Giodi S.P.A., 10099 San Mauro Torinese (TO) (IT)
(72) Inventor: Caruso, Ofelia, 14040 Montaldo Scarampi (AT) (IT); Patrucco, Valentina, 10093 Collegno (TO) (IT)
(74) Representative: Robba, Pierpaolo

(57) **Abstract**

A metallic lustre water-based ink composition, a method of manufacturing it and a writing instrument using said ink, the water-based ink composition comprising a coloured pigment, a metal pigment made of particles with diameters of from 12 to 15 µm in, a glycol, a resin and a surfactant.

## Description

The present invention concerns a metallic lustre water-based ink composition, suitable for use in filter markers and intended for writing on both impermeable and absorbing surfaces.

Markers for metallic lustre writing are known which include an ink reservoir, separated from the writing point by means of an efflux adjusting equipment controlling the rate at which the ink arrives at the marker point.

In general, the efflux adjusting equipment consists of a spring valve, which opens when a pressure is exerted on the writing point. Opening of the spring causes the ink to flow out by gravity and to impregnate the point, thereby allowing writing.

Since the metal particles included in the ink tend to become deposited on the reservoir bottom, it is necessary to shake the marker before use.

To this aim, a steel ball is provided within the reservoir to assist in ink stirring.

Inks used in markers of the above kind generally contain a metal powder, a resin and one or more solvents.

Moreover, antioxidant agents are sometimes included, to prevent oxidation of the metal particles.

A marker of the above kind and the relevant metallic lustre ink are disclosed for instance in US-A-5762694.

That kind of marker has however a number of drawbacks which make its operation uncertain.

More particularly, in the known devices accurate ink dosage is difficult, so that there is a high probability of an excessive ink spreading and therefore of blots.

Moreover, when the valve is closed, the pen point tends to become dry, so that the subsequent impregnation is difficult and the ink dosage is therefore worsened.

Lastly, such writing instruments do not operate when the writing point is turned upwards.

The aim of the present invention is to eliminate or anyhow overcome the above difficulties and drawbacks.

According to the invention, those aims are attained by an ink composition in accordance with claim 1 produced by the method in accordance with claim 7, and by a writing instrument in accordance with claim 9.

Further advantageous features are the subject matter of the dependent claims.

The writing instrument according to the invention operates like a conventional marker and requires no pumping action for valve opening.

In the instrument according to the invention neither ink pressurising within the reservoir, nor ink stirring by means of a metal ball within the reservoir are required. The risk of point drying is moreover eliminated. The marker is always ready to leave the metallic lustre trace on almost any surface and writing is possible also with the point turned upwards.

Moreover, using a water base allows eliminating the problems of toxicity, flammability and pollution of the solvent-based inks.

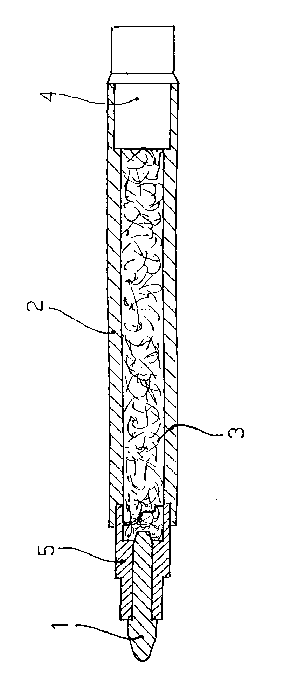

The invention will now be disclosed with reference to the accompanying drawing, which shows a preferred and non-limiting embodiment of the invention.

The drawing schematically shows a writing instrument according to the invention, comprising a cylindrical body or holder 2, closed at one end by a cap 4 and housing an ink reservoir or filter 3 made of polyester. The other end of body 2 is equipped with a point or nib 1 of fibrous material, mounted onto a connecting piece 5, which point is intended for releasing the ink onto the writing support and communicates with filter 3 for fluid passage.

The writing point 1 is made of a fibrous material of which the ducts have sizes of from 15 to 30 µm, suitable to allow passage of the metal pigment particles of the composition according to the invention. Said ducts have cross-sectional sizes considerably exceeding those of the conventional nibs.

Preferably the fibre nibs or points have sizes of from 4x3x25 mm to 5x4x30 mm. A particularly effective embodiment provides a fibre point pen with a size of 4.7x3.8x28 mm.

The ink according to the invention may be made in different metallic lustre colours - e.g. gold, silver, pink, blue, green purple and other colours - and is suitable for perfectly operating with markers equipped with a filter system or reservoir, always in fluid communication with a fibre "nib" or point.

The ink is released to the writing support and does not drop, since it is retained by the filter-point capillary system.

A preferred formulation for the ink according to the invention comprises, by weight:
- a pigmented paste of the desired colour, in a concentration in the range from 0.1 to 40% by weight, of which the particles have sizes of from 0.1 to 0.2 µm;
- a dispersed metal pigment, in a concentration in the range from 20 to 60% by weight;
- a glycol chosen out of diethylene, propylene and triethylene glycol, in a concentration in the range from 1 to 20% by weight;
- a resin chosen out of polyethylene, styrene-acrylic or acrylic resin, in a concentration in the range from 3 to 30% by weight;
- a surfactant chosen out of a cationic, amphoteric and anionic surfactant, in a concentration in the range from 0.1 to 5% by weight;
- a bactericide, in a concentration in the range from 0.1 to 1% by weight;
- water, in a concentration in the range from 10 to 80% by weight.

Preferably the dispersed metal pigment will be aluminium, with particle sizes of from 12 to 15 µm, preferably with an average diameter of 13 µm. However, other metal pigments can be employed.

Moreover, the metal particles will be advantageously coated with a fatty acid, assisting in their dispersion.

The method of obtaining the ink according to the invention will now be described. The method comprises the steps of:
a) mixing the pigmented paste, the metal pigment and the surfactant for a few minutes;
b) adding the resin and the glycol and mixing for a few minutes;
c) adding the water and the bactericide and mixing for some ten minutes.

Even if the invention has been disclosed with reference to a preferred embodiment, different applications and modifications are generally possible which are within the scope of the invention, as it will be clear to the skilled in the art.

## Claims

1. A metallic lustre water-based ink composition, comprising, by weight:
- a pigmented paste of the desired colour, in a concentration in the range from 0.1 to 40%;
- a metal pigment in a concentration in the range from 20 to 60%;
- a glycol in a concentration in the range from 1 to 20%;
- a resin in a concentration in the range from 3 to 30%;
- a surfactant in a concentration in the range from 0.1 to 5%;
- water in a concentration in the range from 10 to 80%.

2. An ink composition according to claim 1, characterised in that said metal pigment is aluminium.

3. An ink composition according to claim 1 or 2, characterised in that said metal pigment comprises particles with an average diameter of from 12 to 15 µm.

4. An ink composition according to any preceding claim, characterised in that said resin is chosen out of the group comprising polyethylene, styrene-acrylic or acrylic resins.

5. An ink composition according to any preceding claim, characterised in that said metal particles are coated with a fatty acid.

6. An ink composition according to any preceding claim, characterised in that the particles of said pigmented paste have diameters of from 0.1 to 0.2 µm.

7. An ink composition according to any preceding claim, characterised in that said glycol is chosen out of diethylene, propylene and triethylene glycol.

8. An ink composition according to any preceding claim, characterised in that it further comprises a bactericide agent, in a concentration in the range from 0.1 to 1%.

9. Method of manufacturing a metallic lustre water-based ink composition, the composition including a pigmented paste of the desired colour, with a concentration in the range from 0.1 to 40%; a metal pigment made ofparticles with an average diameter of from 12 to 15 µm, in a concentration in the range from 20 to 60%; a glycol in a concentration in the range from 1 to 20%; a resin out of polyethylene, styrene-acrylic or acrylic resin, in a concentration in the range from 3 to 30%; a surfactant in an amount in the range from 0.1 to 5%; water, in a concentration in the range from 10 to 80%; the method being characterised in that it comprises the steps of:
a) mixing the pigmented paste, the metal pigment and a surfactant for a few minutes;
b) adding the resin and the glycol and mixing for a few minutes;
c) adding the water and mixing for some ten minutes.

10. A method according to claim 9, characterised in that step c) comprises adding a bactericide, in a concentration in the range from 0.1 to 1%.

11. A writing instrument for metallic lustre writing, comprising a container (2) for an ink filter or reservoir (3) and a writing point (1) of fibrous material provided with internal ducts, fastened to said container (2) and communicating for fluid passage with said filter (3), characterised in that said writing point has internal ducts with a size of from 15 to 30 µm.

12. A writing instrument according to claim 11, characterised in that said point (1) has a size of from 4x3x25 mm to 5x4x30 mm

13. A writing instrument according to claim 11 or 12, characterised in that said filter is made of polyester.
